# EUROPÄISCHE PATENTSCHRIFT

(11) **EP 4 252 521 B1**
(45) Veröffentlichungstag und Bekanntmachung des Hinweises auf die Patenterteilung: **24.09.2025**
(21) Anmeldenummer: 23153472.8
(22) Anmeldetag: 26.01.2023
(51) Int. Cl.: A01F 12/44

(54) **MÄHDRESCHER MIT EINER ABDICHTSTRUKTUR**
COMBINE HARVESTER WITH SEALING STRUCTURE
MOISSONNEUSE-BATTEUSE AVEC STRUCTURE D'ÉTANCHÉITÉ

(30) Priorität: 28.03.2022 DE 102022107190
(43) Veröffentlichungstag der Anmeldung: 04.10.2023
(73) Patentinhaber: CLAAS Selbstfahrende Erntemaschinen GmbH, 33428 Harsewinkel (DE)
(72) Erfinder: Lehmberg, Andreas, 33428 Harsewinkel (DE)
(74) Vertreter: CLAAS Gruppe

(56) Entgegenhaltungen:
- EP-A1- 0 569 798
- EP-A1- 1 790 880
- JP-A- 2018 016 195
- JP-A- H07 315 069
- US-A1- 2002 117 019

## Beschreibung

Die vorliegende Anmeldung betrifft einen Mähdrescher mit einer Abdichtstruktur zur Abdichtung einer Öffnung, die in eine Seitenwandung einer Siebeinrichtung des Mähdreschers eingebracht ist, gemäß dem Oberbegriff von Anspruch 1.

Die Abdichtstruktur umfasst eine Dichteinheit sowie mindestens ein Befestigungsmittel, mittels dessen die Dichteinheit an der Seitenwandung der Siebeinrichtung befestigbar ist. Insbesondere kann genau ein Befestigungsmittel vorhanden sein, wobei vorzugsweise das Befestigungsmittel eine Befestigungsachse definiert, um die herum die Dichteinheit relativ zu der Seitenwandung verschwenkbar ist. Das Befestigungsmittel kann insbesondere von einer Schraube oder einem Niet gebildet sein.

Die jeweilige Seitenwandung der Siebeinrichtung umfasst die Öffnung, die mittels der Abdichtstruktur abgedichtet ist, da ein Anlenkbolzen sich durch die Seitenwandung hindurch erstreckt. Dieser wirkt jenseits der Seitenwandung, d.h. innerhalb eines Siebraums, in dem die Siebeinrichtung angeordnet ist, mit einem Siebeinsatz der Siebeinrichtung zusammen. Diesseits der Seitenwandung wird der Anlenkbolzen beispielsweise mit einem Koppelarm zusammen. Letzterer kann mittelbar oder unmittelbar angetrieben sein, um insbesondere eine oszillierende Bewegung auf den Anlenkbolzen zu übertragen, die wiederum mittels des Anlenkbolzens auf den Siebeinsatz übertragen wird. Hierdurch wird der Siebeinsatz entsprechend oszillierend hin und her bewegt, wodurch in bekannter Weise die siebende Wirkung entfaltet wird. Die Abdichtstruktur dient dazu, die Öffnung, durch die hindurch sich der Anlenkbolzen durch die Seitenwandung der Siebeinrichtung erstreckt, abzudichten. Diese Abdichtung soll insbesondere gegen den unbeabsichtigten Austritt von Erntegut, insbesondere Körnern, aus dem Siebraum heraus erfolgen.

Die Siebeinrichtung ist Teil eines Sieborgans eines Mähdreschers. Als solche umfasst sie einen Siebeinsatz, der in einem Siebraum der Siebeinrichtung eingesetzt ist. Ferner umfasst die Siebeinrichtung mindestens einen Anlenkbolzen, der mit dem Siebeinsatz zusammenwirkt, sowie eine Seitenwandung. Gemäß vorstehender Beschreibung erstreckt sich der Anlenkbolzen durch eine Öffnung, die in der Seitenwandung ausgebildet ist, sodass der Anlenkbolzen sich von dem Siebraum durch die Seitenwandung bis in eine Umgebung der Siebeinrichtung erstreckt. Dort kann der Anlenkbolzen gemäß obiger Beschreibung zumindest mittelbar mit einem Antrieb zusammenwirken. Die Öffnung ist hierbei derart mit einem Übermaß gegenüber dem Anlenkbolzen ausgebildet, dass der Anlenkbolzen innerhalb der Öffnung relativ zu der Seitenwandung bewegbar ist. Dies ist erforderlich, damit der Anlenkbolzen die vorstehend beschriebene oszillierende Bewegung ausführen kann, die mittels des Anlenkbolzens auf den Siebeinsatz übertragen wird. Die Durchführung des Anlenkbolzen durch die Seitenwandung ist mittels einer Abdichtstruktur abgedichtet, sodass der unbeabsichtigte Austritt von Erntegut aus dem Siebraum durch die Öffnung der Seitenwand hindurch in die Umgebung vermieden ist.

Eine Abdichtstruktur sowie eine Siebeinrichtung der vorstehend beschriebenen Art sind im Stand der Technik bereits bekannt. Hierzu wird auf die deutsche Patentschrift DE 42 15 239 C1 hingewiesen. Diese beschreibt eine Abdichtstruktur, die ein topfförmiges Dichtelement umfasst. Dieses Dichtelement ist einer Form der in die Seitenwand der zugehörigen Siebeinrichtung eingebrachten Öffnung folgend oval ausgebildet, um die Öffnung vollständig abzudecken. Das Dichtelement ist unter Aufbringung einer Andrückkraft gegen eine dem Siebraum zugewandte Oberfläche der Seitenwandung gedrückt, wodurch die dichtende Wirkung erreicht wird.

Die bekannte Abdichtstruktur hat den Nachteil, dass sie Bewegungen nicht folgen kann, die in Längsrichtung des Anlenkbolzen orientiert sind. Eine solche Bewegung des Siebeinsatzes ist jedoch hinsichtlich einer gesteigerten Effizienz der Siebeinrichtung vorteilhaft, da die Siebeinsätze jeweils "dreidimensional" oszillierend bewegt werden, das heißt mit vektoriellen Anteilen in alle drei Raumrichtungen. Eine entsprechende Amplitude einer solchen axialen, parallel zu der Längsachse des Anlenkbolzens orientierten Bewegung ist dabei bevorzugt von solchem Betrag, dass die topförmige Ausgestaltung eines Dichtelements, wie es im Stand der Technik beschrieben ist, die Bewegung nicht in ausreichendem Maße ausgleichen kann, ohne dass das Dichtelement Schaden nimmt oder seine Dichtwirkung verliert.

Der vorliegenden Anmeldung liegt mithin die Aufgabe zugrunde, eine Abdichtstruktur bereitzustellen, die die Öffnung in der Seitenwandung der Siebeinrichtung zuverlässig abdichtet.

Die zugrunde liegende Aufgabe wird erfindungsgemäß mittels eines Mähdreschers mit einer Abdichtstruktur mit den Merkmalen des Anspruchs 1 gelöst. Vorteilhafte Ausgestaltungen ergeben sich aus den zugehörigen Unteransprüchen.

Die Abdichtstruktur ist erfindungsgemäß dazu eingerichtet, senkrecht zu einer Befestigungsachse des Befestigungsmittels orientierte Bewegungen eines in der Ausnehmung aufgenommenen Anlenkbolzens auszugleichen, wobei zumindest ein Teil der Dichteinheit in einer senkrecht zu der Befestigungsachse orientierten Ebene relativ zu dem Befestigungsmittel bewegbar ist. Die Dichteinheit kann insbesondere von einem Kunststoff, insbesondere von einem Hartkunststoff, von Gummi oder von Metall, insbesondere von einem Blech, gebildet sein.

Die erfindungsgemäße Abdichtstruktur hat viele Vorteile. Insbesondere ist sie dazu geeignet, die Öffnung in der Seitenwandung der Siebeinrichtung zuverlässig abzudichten, und zwar auch für den Fall, dass der Anlenkbolzen, der sich durch die Ausnehmung der Dichteinheit hindurch erstreckt, parallel zu seiner Längsachse bewegt wird. Diese Bewegung des Anlenkbolzens führt zu einer Bewegung desselben relativ zu der Dichteinheit, wobei der Anlenkbolzen in der Ausnehmung der Dichteinheit gleitet. Hierzu ist es besonders von Vorteil, wenn die Dichteinheit eine hohe Steifigkeit aufweist, wobei die Dichteinheit vorzugsweise von einem Material gebildet ist, das einen E-Modul von mindestens 40.000 N/mm², weiter vorzugsweise mindestens 80.000 N/mm², weiter vorzugsweise mindestens 100.000 N/mm², aufweist. Die Dichteinheit ist mittels des Befestigungsmittels an der Seitenwandung befestigt, sodass eine Bewegung der Dichteinheit in eine Richtung senkrecht zu einer Wandungsfläche der Seitenwandung zumindest im Wesentlichen unterbunden ist. Die beschriebene hohe Steifigkeit trägt dazu bei, dass eine Verformung der Dichteinheit in eine Richtung parallel zu der Längsachse des Anlenkbolzens bzw. senkrecht zu der Wandungsfläche der Seitenwandung unter einer Krafteinwirkung nur minimal ist. Eine solche Krafteinwirkung kann insbesondere insoweit vorliegen, als der Anlenkbolzen im Zuge seiner oszillierenden Bewegung parallel zu seiner Längsachse an einem inneren Rand der Ausnehmung der Dichteinheit reibt und hierdurch Kräfte in die Dichteinheit einträgt, die parallel zu der Längsachse der Dichteinheit orientiert sind. Diese Kräfte könnten zu einer Bewegung der Dichteinheit parallel zu der Längsachse des Anlenkbolzens führen, was jedoch aufgrund der Fixierung der Dichteinheit an der Seitenwandung mittels des Befestigungsmittels unterbunden ist.

Gleichzeitig ist die Abdichtstruktur in bevorzugter Weise aufgrund der Lagerung des Dichtelements mittels des Befestigungsmittels dazu geeignet, eine Schwenkbewegung um die Befestigungsachse des Befestigungsmittels relativ zu der Seitenwandung auszuführen. Somit können insbesondere oszillierende Bewegungen des Anlenkbolzens, die senkrecht zu dessen Längsachse orientiert sind, ausgeglichen werden, wobei sich das Dichtelement analog zu dem Anlenkbolzen relativ zu der Seitenwandung bewegt.

Ein weiterer Vorteil ist darin zu sehen, dass die Abdichtstruktur besonders flach ausgebildet sein kann. Insbesondere kann das Dichtelement in Form einer dünnen Scheibe ausgebildet sein, deren Länge und Breite deutlich größer sind als ihre Dicke. Auf diese Weise kann das Dichtelement flächig an der Seitenwandung anliegen und hierbei die Öffnung in dichtender Weise überdecken, sodass die Abdichtstruktur lediglich in solchem Maß auf die Seitenwandung aufträgt, das der Dicke des Dichtelements entspricht. Diese platzsparende Ausgestaltung der Abdichtstruktur ist besonders vorteilhaft, da in dem Siebraum der vorhandene Bauraum im Bereich der Öffnung der Seitenwandung typischerweise knapp ist.

In einer vorteilhaften Ausgestaltung der erfindungsgemäßen Abdichtstruktur ist die Dichteinheit um die Befestigungsachse verschwenkbar. Die sich hierdurch ergebenden Vorteile sind vorstehend bereits dargelegt. Insbesondere kann das Dichtelement bei dieser Ausgestaltung einer Bewegung des Anlenkbolzens in eine Richtung senkrecht zu der Längsachse des Anlenkbolzens folgen, indem das Dichtelement um die Befestigungsachse relativ zu der Seitenwandung verschwenkt.

Weiterhin kann eine solche Ausgestaltung von besonderem Vorteil sein, bei der eine Ausnehmungsfläche der Ausnehmung, die einen Rand der Ausnehmung beinhaltet, senkrecht zu einer Befestigungsachse des Befestigungsmittels orientiert ist. Diese Ausgestaltung ist besonders von Vorteil, um die Dichteinheit möglichst platzsparend auszuführen. Insbesondere kann die Dichteinheit in Form einer dünnen Scheibe ausgebildet sein, die die Ausnehmung beinhaltet. Diese Scheibe kann insbesondere mittels des Befestigungsmittels an der Seitenwand befestigt sein, wobei die Befestigungsachse des Befestigungsmittels senkrecht zu der Ausnehmungsfläche der Ausnehmung orientiert ist.

In einer besonders vorteilhaften Ausgestaltung der erfindungsgemäßen Abdichtstruktur ist ein senkrecht zu der Befestigungsachse des Befestigungsmittels gemessener Abstand zwischen eine Mittelpunkt der Ausnehmung und der Befestigungsachse im Zuge einer bestimmungsgemäßen Verwendung der Abdichtstruktur fortwährend veränderbar. Mit anderen Worten ist in der Abdichtstruktur eine Bewegbarkeit ausgebildet, die eine Bewegung der Ausnehmung relativ zu dem Befestigungsmittel erlaubt. Entsprechend ist mittels einer solchen Abdichtstruktur eine Bewegung des Anlenkbolzens relativ zu den Befestigungsmittel in eine Richtung senkrecht zu seiner Längsachse möglich. Eine solche Bewegbarkeit kann insoweit bedeutsam sein, als eine Kreisbahn, auf der die Ausnehmung um die Befestigungsachse verschwenken kann, typischerweise von einer Kreisbahn verschieden ist, auf der der Anlenkbolzens mittels eines zugehörigen Antriebs zwecks oszillierender Bewegung des Siebeinsatzes geführt ist. Insbesondere kann der Anlenkbolzens mit einem vorstehend beschriebenen Koppelarm zusammenwirken, der seinerseits an einem festen Drehlager gelagert ist. Ein Antrieb des Koppelarms führt zu einer oszillierenden Schwenkbewegung desselben um dessen Drehlager, wobei der Anlenkbolzens auf einer Kreisbahn um das Drehlager geführt wird. Typischerweise sind der Anlenkbolzens und das Drehlager an einander gegenüberliegenden Enden des Koppelarms ausgebildet. Da der Anlenkbolzens und die Ausnehmung der Dichteinheit mithin auf verschiedenen Kreisbahnen um verschiedene Drehpunkte verschwenkt werden (der Koppelarm um das Drehlager, die Dichteinheit um die Befestigungsachse), geht eine Bewegung des Anlenkbolzens, die maßgebend ist, aufgrund der formschlüssigen Verbindung des Anlenkbolzens mit der Dichteinheit infolge des Eingriffs des Anlenkbolzens in die Ausnehmung der Dichteinheit zwingend mit einer gleichartigen Bewegung der Ausnehmung entlang desselben Pfades einher. Dieser Pfad, auf den die Ausnehmung dementsprechend gezwungen wird, kann nicht allein durch eine Schwenkbewegung der Ausnehmung um die Befestigungsachse des Befestigungsmittels der Abdichtstruktur abgebildet werden. Stattdessen ist es kinematisch erforderlich, dass sich der Abstand zwischen der Ausnehmung bzw. deren Mittelpunkt und der Befestigungsachse im Zuge der Bewegung des Anlenkbolzens verändert. Entsprechend ist es von besonderem Vorteil, wenn besagter Abstand fortwährend veränderbar ist.

In einer ersten bevorzugten Ausführungsform verfügt die Dichteinheit über ein Langloch, in dem das Befestigungsmittel geführt ist. Eine Langlochachse des Langlochs ist bevorzugt derart auf die Ausnehmung ausgerichtet, dass der Mittelpunkt der Ausnehmung auf der Langlochachse liegt. Aufgrund des Langlochs kann die Dichteinheit relativ zu dem Befestigungsmittel in eine Richtung parallel zu der Langlochachse bewegt werden, wobei diese Bewegung betragsmäßig auf eine parallel zu der Langlochachse gemessene Länge des Langlochs beschränkt ist. Diese Ausgestaltung ermöglicht die vorstehend beschriebene fortwährende Änderung des Abstands der Befestigungsachse von dem Mittelpunkt der Ausnehmung. Hierzu ist bei bestimmungsgemäßer Verwendung der Abdichtstruktur das Befestigungsmittel derart mit der Dichteinheit wirkverbunden, dass eine Bewegung der Dichteinheit relativ zu den Befestigungsmittel in eine Richtung parallel zu der Langlochachse ermöglicht ist. Gleichwohl wirken das Befestigungsmittel und die Dichteinheit derart zusammen, dass die Dichteinheit mittels des Befestigungsmittels an der Seitenwandung der jeweiligen Siebeinrichtung festgelegt ist. Dies betrifft insbesondere eine Festlegung in Richtung der Befestigungsachse des Befestigungsmittels, wobei bevorzugt das Dichtelement flächig mit einer Oberfläche der Seitenwandung in Kontakt steht.

Erfindungsgemäß ist die Dichteinheit zweiteilig ausgebildet, um die beschriebene Möglichkeit zur Veränderung des Abstands zwischen dem Mittelpunkt der Ausnehmung und dem Befestigungsmittel zu bewerkstelligen. Hierbei verfügt die Dichteinheit über einen Grundkörper und einen Schiebeinsatz, wobei der Schiebeinsatz relativ zu dem Grundkörper bewegbar an letzterem gelagert ist. Die Ausnehmung ist bei dieser Ausgestaltung an bzw. in dem Schiebeinsatz ausgebildet. Der Schiebeinsatz kann insbesondere relativ zu dem Grundkörper linear verschieblich sein, wobei beispielsweise der Schiebeinsatz mittels einer Nut-Feder-Verbindung formschlüssig mit dem Grundkörper zusammenwirkt. Die Anordnung der Ausnehmung in dem Schiebeinsatz ermöglicht mithin, dass der Abstand zwischen der Ausnehmung und dem Befestigungsmittel, das mit dem Grundkörper zusammenwirkt, bei einer bestimmungsgemäßen Verwendung der Abdichtstruktur verändert werden kann. Hierbei wird aufgrund der zwingenden Führung der Ausnehmung auf der Kreisbahn, die der Anlenkbolzen um dessen jeweilige Drehachse beschreibt, über den Anlenkbolzen eine senkrecht zu einer Längsachse des Anlenkbolzens gerichtete Kraft in den Schiebeinsatz eingeleitet, der daraufhin translatorisch relativ zu dem Grundkörper bewegt wird. Dies erfolgt entlang einer Schiebeachse, die bevorzugt die Befestigungsachse des Befestigungsmittels schneidet sowie senkrecht zu dieser orientiert ist.

Die Siebeinrichtung ist dadurch gekennzeichnet, dass die Abdichtstruktur, mittels der die Öffnung in der Seitenwandung abgedichtet ist, gemäß vorliegender Erfindung ausgebildet ist. Hierbei ist eine Dichteinheit der Abdichtstruktur mittels eines Befestigungsmittels der Abdichtstruktur an der Seitenwandung befestigt.

Die Siebeinrichtung ist mittels der Abdichtstruktur besonders einfach umsetzbar. Die sich hierdurch ergebenden Vorteile sind vorstehend bereits dargelegt. Insbesondere kann die Öffnung in der Seitenwandung zuverlässig gegen den unbeabsichtigten Durchtritt von Körnern abgedichtet werden, wobei gleichzeitig eine gewünschte Bewegbarkeit des Anlenkbolzens relativ zu der Seitenwandung erhalten wird. Die Dichtwirkung der Abdichtstruktur bleibt hierbei auch in solchen Fällen erhalten, in denen der Anlenkbolzen oszillierend in eine Richtung parallel zu seiner Längsachse bewegt wird. Zudem kann die Abdichtstruktur besonders platzsparend ausgebildet sein, sodass sie nur geringen Bauraum in der Siebeinrichtung einnimmt. Bevorzugt ist die Dichteinheit von dem Siebraum her an der Seitenwandung mittels des Befestigungsmittels befestigt.

Vorteilhafterweise erstreckt sich der Anlenkbolzen senkrecht zu einer Ausnehmungsfläche der Ausnehmung. Auf diese Weise ist der Eintrag von Reibkräften von dem Anlenkbolzen in die Dichteinheit minimiert, der im Zuge einer Bewegung des Anlenkbolzens parallel zu seiner Längsachse und mithin senkrecht zu der Ausnehmungsfläche stattfindet.

In einer bevorzugten Ausführungsform ist die Dichteinheit um die Befestigungsachse relativ zu der Seitenwandung verschwenkbar ausgebildet. Hierdurch ist grundsätzlich die Möglichkeit geschaffen, dass die Dichteinheit - einer oszillierenden Bewegung des Anlenkbolzens folgend - relativ zu der Seitenwandung bewegt werden kann, wenn der Anlenkbolzen in eine Richtung senkrecht zu seiner Längsachse bewegt wird.

Weiterhin kann eine solche Ausgestaltung der Siebeinrichtung besonders vorteilhaft sein, bei der die Öffnung der Seitenwandung in Form eines Langlochs ausgebildet ist. Hierdurch ist sichergestellt, dass sich der Anlenkbolzen bei bestimmungsgemäßer Verwendung der Siebeinrichtung relativ zu der Seitenwandung entlang einer Langlochachse der Öffnung bewegen kann. Hierdurch ist es möglich, den Anlenkbolzen anzutreiben und hierdurch in gewünschter Weise eine oszillierende Bewegung auf den Siebeinsatz zu übertragen.

Ferner ist es vorteilhaft, wenn die Dichteinheit scheibenförmig ausgebildet ist, wobei eine Dicke der Dichteinheit deren übrigen Abmessungen, insbesondere deren Länge und deren Breite, deutlich unterschreitet. Insbesondere kann die Dichteinheit eine Dicke von höchstens 10 mm, vorzugsweise höchstens 7,5 mm, weiter vorzugsweise höchstens 5 mm, aufweisen. Hierbei ist die Abdichtstruktur bevorzugt derart relativ zu der Seitenwandung angeordnet, dass die Dichteinheit flächig an einer Oberfläche der Seitenwandung anliegt und hierbei die in der Seitenwandung ausgebildete Öffnung überdeckt. Die Ausnehmung, die in der Dichteinheit ausgebildet ist und die zur Durchführung des Anlenkbolzens dient, ist hierbei deckungsgleich mit einem Öffnungsquerschnitt der Öffnung angeordnet, sodass der Anlenkbolzen durch die Öffnung sowie durch die Ausnehmung der Dichteinheit geführt werden kann. Die Dichteinheit ist mittels des Befestigungsmittels bevorzugt unmittelbar an der Seitenwandung befestigt, wobei das Befestigungsmittel vorzugsweise von einer Schraube oder einem Niet gebildet ist.

Weiterhin kann eine solche Ausgestaltung der Abdichtstruktur von besonderem Vorteil sein, bei der die Dichteinheit mit einem Schlitz ausgebildet ist. Sofern die Dichteinheit mit einem Grundkörper und einem Schiebeinsatz ausgebildet ist, ist der Schlitz bevorzug in dem Schiebeinsatz ausgebildet. Der Schlitz erstreckt sich von der Ausnehmung zu einem Rand der Dichteinheit. Der Vorteil dieser Ausgestaltung besteht darin, dass die Dichteinheit auf einen jeweiligen Anlenkbolzen aufgeschoben werden kann, wobei insbesondere das Material, von dem die Dichteinheit gebildet ist, im Bereich des Schlitzes temporär verdrängt wird, sodass der Anlenkbolzen entlang des Schlitzes bis zu der Ausnehmung geführt werden kann. Diese Ausgestaltung ist dann besonders von Vorteil, wenn das Material, von dem die Dichteinheit gebildet ist, einen ausgeprägten elastischen Bereich und eine geringe Steifigkeit aufweist. Dies kann beispielsweise bei einem Kunststoff oder Gummi der Fall sein.

Ebenfalls kann eine solche Ausgestaltung vorteilhaft sein, bei der der Schiebeinsatz zwei relativ zueinander verschwenkbare Elemente umfasst, wobei der Schiebeinsatz mittels Verschwenkens der beiden Elemente relativ zueinander zwischen einer Offenstellung und einer Schließstellung überführbar ist. Die beiden Elemente, die bevorzugt jeweils zumindest im Wesentlichen eine Hälfte des Schiebeinsatzes bilden, weisen jeweils einen Teil eines Randes der Ausnehmung auf, die zur Aufnahme des Anlenkbolzens bestimmt ist. Bei Vorliegen des Schiebeinsatzes in der Offenstellung sind die beiden Teile des Randes der Ausnehmung derart voneinander beabstandet, dass sie nicht geeignet sind, die Ausnehmung randseitig zu begrenzen. Bei Vorliegen des Schiebeinsatzes in seiner Schließstellung begrenzen die beiden Teile des Randes jedoch die Ausnehmung in solcher Weise, dass ein Anlenkbolzen zumindest im Wesentlichen passgenau in der Ausnehmung aufnehmbar ist.

Die Verschwenkbarkeit der beiden Elemente relativ zueinander bietet eine besonders einfache Möglichkeit, den Schiebeinsatz mit einem jeweiligen Anlenkbolzen in Eingriff zu bringen, wobei der Schiebeinsatz bei Vorliegen in seiner Offenstellung über den Anlenkbolzen geschoben und sodann in seine Schließstellung überführt wird. Im Zuge dessen werden die Elemente derart relativ zu dem Anlenkbolzen bewegt, dass dieser schließlich umfangsseitig von den beiden Teilen des Randes der Ausnehmung eingefasst ist.

In einer weiterhin vorteilhaften Ausgestaltung der erfindungsgemäßen Abdichtstruktur umfasst diese eine Trägerplatte, wobei die Dichteinheit mittels des Befestigungsmittels an der Trägerplatte befestigt ist. Die Trägerplatte ist dazu geeignet, unmittelbar mit einer Seitenwandung einer jeweiligen Siebeinrichtung verbunden zu werden. Gegenüber einer Befestigung der Dichteinheit mittels des Befestigungsmittels unmittelbar an der Seitenwandung einer Siebeinrichtung hat die Ausgestaltung der Abdichtstruktur mit der Trägerplatte den Vorteil, dass eine Vormontage der Dichteinheit stattfinden kann. Die Trägerplatte ist gegenüber der Dichteinheit als solcher typischerweise einfacher in beengten Platzverhältnissen im Bereich einer Siebeinrichtung an der Seitenwandung derselben zu montieren, beispielsweise bedingt dadurch, dass die Trägerplatte typischerweise von einem Blech gebildet ist, das vergleichsweise einfach entlang einer Oberfläche der jeweiligen Seitenwandung bewegt werden kann. Demgegenüber kann die Dichteinheit zumindest dann, wenn sie von einem Kunststoff oder von Gummi gebildet ist, einen vergleichsweise hohen Reibungskoeffizienten aufweisen, der es erschweren könnte, die Dichteinheit in beengten Platzverhältnissen an eine für die Montage vorgesehene Stelle zu bewegen, insbesondere entlang einer Oberfläche der Seitenwandung der Siebeinrichtung zu schieben.

Die Erfindung ist nachstehend anhand eines Ausführungsbeispiels, das in den Figuren dargestellt ist, näher erläutert. Es zeigt:
- Fig. 1:: Ein Querschnitt durch einen Mähdrescher, in dem eine erfindungsgemäße Siebeinrichtung mit einer erfindungsgemäßen Abdichtstruktur verbaut ist,
- Fig. 2:: Ein Detail der Siebeinrichtung, die in dem Mähdrescher gemäß Figur 1 verbaut ist,
- Fig. 3:: Ein Detail der Abdichtstruktur, die bei der Siebeinrichtung gemäß Figur 2 verbaut ist,
- Fig. 4:: Eine Explosionsdarstellung der Abdichtstruktur gemäß Figur 3,
- Fig. 5:: Eine perspektivische Darstellung einer alternativen erfindungsgemäßen Abdichtstruktur,
- Fig. 6:: Eine weitere Darstellung der Abdichtstruktur gemäß Figur 5,
- Fig. 7:: Eine alternative Abdichtstruktur, wobei ein Schiebeinsatz in einer Offenstellung vorliegt,
- Fig. 8:: Die Abdichtstruktur gemäß Figur 7, wobei jedoch der Schiebeinsatz in seiner Schließstellung vorliegt,
- Fig. 9:: Eine alternative Abdichtstruktur, die eine Trägerplatte umfasst.

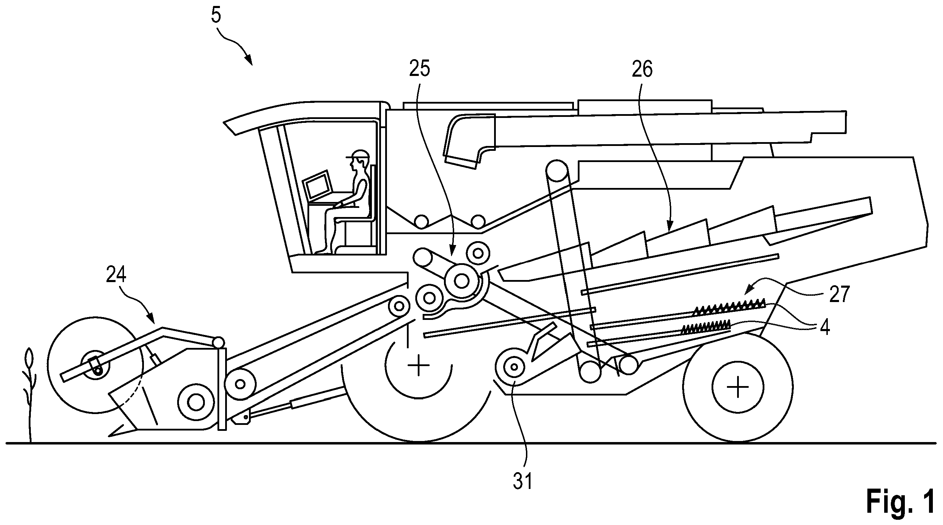

Das Ausführungsbeispiel befasst sich mit einer erfindungsgemäßen Siebeinrichtung **4,** die in einem Mähdrescher **5** verbaut ist. Dieser Mähdrescher **5,** der sich anhand von **Figur 1** ergibt, umfasst ein Schneidorgan **24,** mittels dessen Pflanzen von einem Feld abschneidbar sind. Diese werden zu einem Dreschorgan **25** weitergeleitet und mittels letzterem verarbeitet, wodurch Körner aus Ähren der Pflanzen ausgedroschen und hierdurch von Pflanzenresten abgelöst werden. Das Gemisch aus abgelösten Körnern und Pflanzenresten wird an eine Trenneinrichtung **26** weitergeleitet, mittels der die abgelösten Körner zumindest von groben Pflanzenresten getrennt werden. Daran anschließend erfolgt ein Absieben feiner Pflanzenreste von den abgetrennten Körnern mittels eines Sieborgans **27.** Dieses umfasst in dem gezeigten Beispiel eine Mehrzahl von erfindungsgemäßen Siebeinrichtungen **4.** Insbesondere umfasst das Sieborgan **27** ein Obersieb und ein Untersieb, mittels dessen die Körner von feinen Pflanzenresten, insbesondere Spreu, trennbar sind. Um das Absieben möglichst effektiv zu bewerkstelligen, werden Siebeinsätze **21** der Siebeinrichtungen **4** oszillierend bewegt. Hierdurch wird insbesondere das auf den Sieben aufliegende Gemisch aus Körnern und verbliebenen Pflanzenresten wiederholt aufgeworfen und in Bewegung versetzt, wobei die feinen Pflanzenreste von einem Luftstrom erfasst und ausgetragen werden können. Der Luftstrom wird mittels eines Gebläses **31** erzeugt.

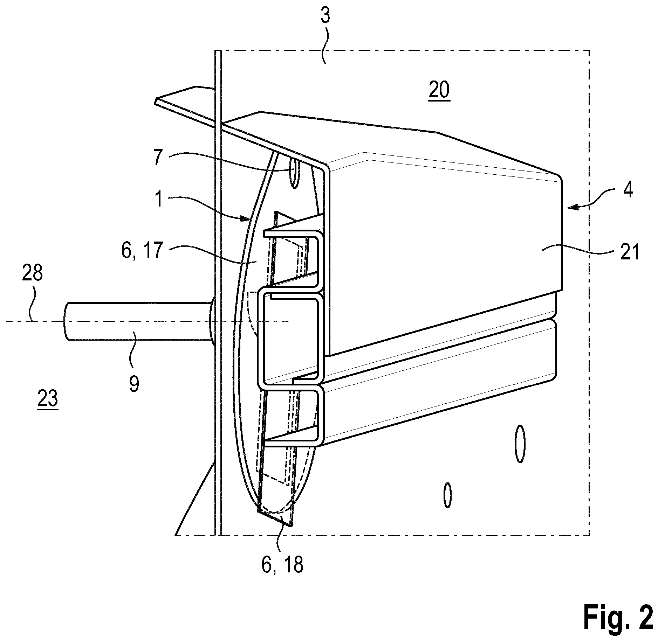

Um die Siebeinsätze **21** in der gewünschten Weise oszillierend zu bewegen, sind diese jeweils mit einer Mehrzahl von Anlenkbolzen **9** verbunden, von denen sich einer besonders gut anhand von **Figur 2** ergibt. Die dortige Siebeinrichtung **4** umfasst den genannten Siebeinsatz **21,** der in einem Siebraum **20** angeordnet ist. Dieser Siebraum **20** ist seitlich durch eine Seitenwandung **3** der Siebeinrichtung **4** begrenzt. Besagte Seitenwandung **3** umfasst eine Öffnung **2,** durch die hindurch sich der Anlenkbolzen **9** erstreckt. Hierbei ist der Anlenkbolzen **9** jenseits der Seitenwandung **3,** d.h. innerhalb des Siebraums **20,** in Kraft übertragender Weise mit dem Siebeinsatz **21** verbunden, sodass Kräfte, die auf den Anlenkbolzen **9** ausgeübt werden, auf den Siebeinsatz **21** übertragbar sind. Diesseits der Seitenwandung **3,** d.h. in einer Umgebung **23** der Siebeinrichtung **4,** wirkt der Anlenkbolzen **9** mit einem in den Figuren nicht dargestellten Koppelarm zusammen, mittels dessen der Anlenkbolzen **9** antreibbar ist. Der Antrieb des Anlenkbolzens **9** führt zu einer oszillierenden Bewegung desselben sowohl in eine Richtung "hin und her" senkrecht zu einer Längsachse **29** des Anlenkbolzens **9** sowie "vor und zurück" in eine Richtung parallel zu der Längsachse **29** des Anlenkbolzens **9.** Damit der Anlenkbolzen 9 die Bewegung senkrecht zu seiner Längsachse **29** ausführen kann, ist die Öffnung **2** in der Seitenwandung **3** in dem gezeigten Beispiel in Form eines Langlochs ausgeführt, dass sich entlang einer Langlochachse **22** erstreckt. Auf diese Weise ist eine Fläche der Öffnung **2** deutlich größer als eine Querschnittsfläche des Anlenkbolzens **9,** sodass letzterem ein Bewegungsspielraum in der Öffnung **2** zur Verfügung steht.

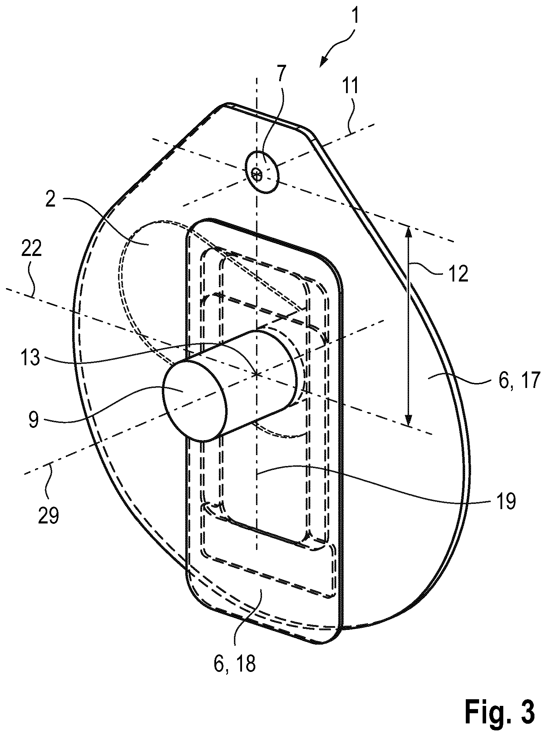

Um einen Austritt von Körnern von dem Siebraum **20** durch die Öffnung **2** in die Umgebung **23** zu verhindern, umfasst die Siebeinrichtung **4** eine erfindungsgemäße Abdichtstruktur **1,** mittels der die Öffnung **2** abgedichtet ist. Die Abdichtstruktur **1** ist in dem gezeigten Beispiel an einer von dem Siebraum **20** aus betrachteten Innenseite der Seitenwandung **3** angeordnet. Hierbei umfasst die Abdichtstruktur **1** ein Dichtelement **6** sowie ein Befestigungsmittel **7.** Das Befestigungsmittel **7,** das hier von einem Niet gebildet ist, ist dazu eingerichtet, das Dichtelement **6** in Kraft übertragender Weise an der Seitenwandung **3** zu fixieren. Das Befestigungsmittel **7** stellt hierbei in dem gezeigten Beispiel das einzige Befestigungsmittel dar, mittels dessen diese Fixierung der Dichteinheit **6** erfolgt. Das Befestigungsmittel **7** beschreibt eine Befestigungsachse **11,** die sich besonders gut anhand von **Figur 3** ergibt. Da die Dichteinheit **6** lediglich mittels dieses einen Befestigungsmittels **7** an der Seitenwandung **3** fixiert ist, kann die Dichteinheit **6** zumindest in einem gewissen Umfang um die Befestigungsachse **11** relativ zu der Seitenwandung **3** verschwenkt werden.

Die Dichteinheit **6** umfasst eine Ausnehmung **8,** die in dem gezeigten Beispiel von ihren Abmessungen her auf den Querschnitt des Anlenkbolzens **9** abgestimmt ist. Entsprechend ist der Anlenkbolzen **9** passgenau in der Ausnehmung **8** aufgenommen bzw. durch diese hindurch geführt. Dies ermöglicht einen Durchtritt des Anlenkbolzens **9** durch die Abdichtstruktur **1** sowie die Öffnung **2** der Seitenwandung **3** bei gleichzeitiger Abdichtung der Öffnung **2** mittels der Dichteinheit **6.** Der Anschluss der Dichteinheit **6** mittels des Befestigungsmittels **7** in der vorstehend beschriebenen Weise führt dazu, dass die Dichteinheit **6** der oszillierenden Bewegung des Anlenkbolzens **9,** die dieser in eine Richtung parallel zu der Langlochachse **22** der Öffnung **2** ausführt, folgen kann. Hierdurch ist sichergestellt, dass die Abdichtstruktur **1** die Öffnung **2** während eines bestimmungsgemäßen Betriebs der Siebeinrichtung **4** abdichten kann.

Neben der Schwenkbarkeit der Dichteinheit **6** um die Befestigungsachse **11** ermöglicht die Abdichtstruktur **1** ferner eine Änderung eines Abstands **12** eines Mittelpunkts **13** der Ausnehmung **8** von der Befestigungsachse **11.** Dieser Abstand **12** wird in dem gezeigten Beispiel senkrecht zu der Befestigungsachse **11** sowie innerhalb einer Ebene gemessen, die von einer Ausnehmungsfläche **10** der Ausnehmung **8** aufgespannt wird. Im Zuge eines Antriebs des Anlenkbolzens **9** bewegt sich die Ausnehmung **8** aufgrund der Schwenkbewegung der Dichteinheit **6** um die Befestigungsachse **11** auf einer Kreisbahn um jene Befestigungsachse **11.** Diese Kreisbahn hat einen anderen Radius als eine Kreisbahn, die der Anlenkbolzen **9** infolge seines Antriebs um ein zugehöriges, in den Figuren nicht gezeigtes Drehlager beschreibt. Dies führt dazu, dass der Anlenkbolzen **9** relativ zu den Befestigungsmittel **7** im Zuge seiner oszillierenden Bewegung "auf und ab" bewegt wird, d.h. fortwährend seinen senkrecht zu der Befestigungsachse **11** gemessenen Abstand zu dem Befestigungsmittel **7** verändert. Damit die Dichteinheit **6** die Öffnung **2** zuverlässig abdichten kann, ist mithin vorgesehen, dass sich auch der Abstand **12** zwischen dem Mittelpunkt **13** der Ausnehmung **8** und der Befestigungsachse **11** des Befestigungsmittels **7** fortwährend ändern kann.

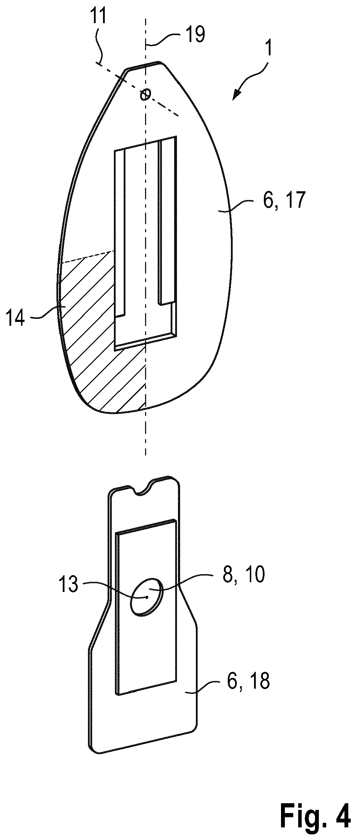

Um dies zu erreichen, ist in einem ersten Ausführungsbeispiel einer erfindungsgemäßen Abdichtstruktur **1,** die in den **Figuren 2 bis 4** dargestellt ist, die Dichteinheit **6** von einem Grundkörper **17** und einem Schiebeinsatz **18** gebildet. Wie sich insbesondere anhand von **Figur 4** ergibt, ist der Schiebeinsatz **18** mittels eines Nut-FederSystems an dem Grundkörper **17** gelagert, wobei der Schiebeinsatz **18** sich entlang einer Schiebeachse **19** relativ zu dem Grundkörper **17** bewegen kann. Die Schiebeachse **19** ist hierbei derart ausgerichtet, dass sie sich mit der Befestigungsachse **11** schneidet sowie in einem Winkel von 90° relativ zu der Befestigungsachse **11** orientiert ist. Die Ausnehmung **8** ist in dem Schiebeinsatz **18** ausgebildet. Hierdurch ist bewirkt, dass im Zuge einer Bewegung des Anlenkbolzens **9** der Schiebeinsatz **18** parallel zu der Schiebeachse **19** relativ zu dem Grundkörper **17** bewegt werden kann, wodurch der Abstand **12** zwischen dem Mittelpunkt **13** der Ausnehmung **8** und der Befestigungsachse **11** veränderbar ist. Auf diese Weise kann die Abdichtstruktur **1** die Bewegung des Anlenkbolzens **9** ausgleichen, ohne dass die dichtende Wirkung im Hinblick auf die Öffnung **2** verloren geht.

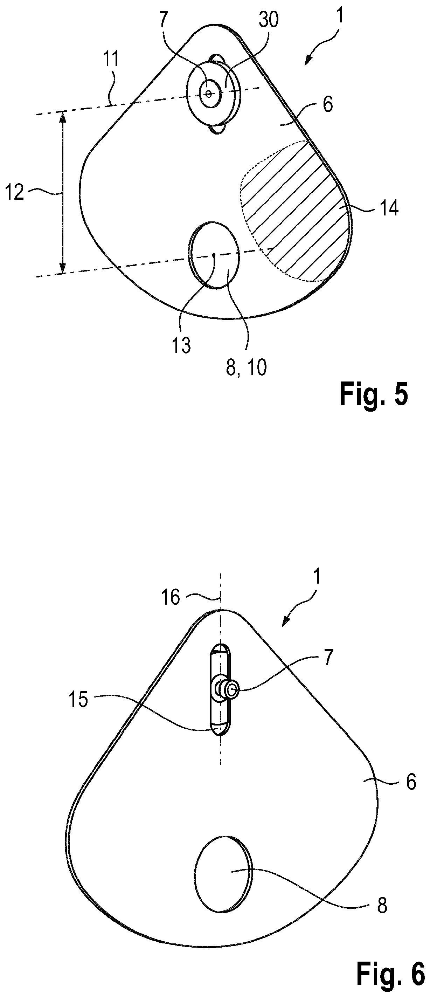

In einer alternativen Ausführungsform einer erfindungsgemäßen Abdichtstruktur **1,** die sich anhand der **Figuren 5 und 6** ergibt, wird die Möglichkeit der Veränderung des Abstands **12** zwischen dem Mittelpunkt **13** der Ausnehmung **8** und der Befestigungsachse **11** des Befestigungsmittels **7** dadurch erreicht, dass das Befestigungsmittel **7 in** einem Langloch **15** gelagert ist. Dieses Langloch **15** erstreckt sich entlang einer Langlochachse **16,** die in dem gezeigten Beispiel in Richtung der Ausnehmung **8** orientiert ist, wobei der Mittelpunkt **13** der Ausnehmung 8 auf der Langlochachse **16** liegt. Das Befestigungsmittel **7** wirkt über eine Unterlegscheibe **30** mit der Dichteinheit **6** zusammen. Die Bewegung des Anlenkbolzens **9** wird bei dieser Ausgestaltung dadurch ausgeglichen, dass die Dichteinheit **6** als Ganze relativ zu dem Befestigungsmittel **7** entlang der Langlochachse **16** translatorisch bewegt wird. In Kombination mit der Verschwenkbarkeit des Dichtelements **6** um die Befestigungsachse **11** liegen mithin zwei Freiheitsgrade vor, die eine gewünschte oszillierende Bewegung des Anlenkbolzens **9** ermöglichen, ohne dass die Abdichtstruktur **1** ihre dichtende Wirkung betreffend die Öffnung **2** in der Seitenwandung **3** einbüßt.

In besonders bevorzugter Weise ist die Abdichtstruktur **1** in beiden gezeigten Ausführungsform mit einer scheibenförmigen Dichteinheit **6** ausgestattet, die flächig an der Oberfläche der Seitenwandung **3** anliegt. Hierdurch bildet die Dichteinheit **6** eine Dichtfläche **14** aus, mit der die Dichteinheit **6** in dichtender Weise an der Oberfläche der Seitenwandung **3** anliegt. Aufgrund der Fixierung der Dichteinheit **6** an der Seitenwandung **3** mittels des Befestigungsmittels **7** ist eine Bewegung der Dichteinheit **6** in eine Richtung parallel zu der Längsachse **29** des Anlenkbolzens **9** im Wesentlichen unterbunden. Dies gilt insbesondere dann, wenn die Dichteinheit **6** von einem vergleichsweise steifen Material gebildet ist, insbesondere einem Hartkunststoff, von Gummi oder von einem Blech. Diese Ausgestaltung führt dazu, dass die Dichteinheit **6** gar nicht oder höchstens in vernachlässigbarem Umfang infolge einer Bewegung des Anlenkbolzens **9** parallel zu seiner Längsachse **29** von der Seitenwandung **3** abgehoben wird, wodurch die Dichtfläche **14** den unmittelbaren Kontakt mit der Seitenwandung **3** verliert. Eine solche Bewegung wird durch eine Reibung angetrieben, die zwischen einer äußeren Mantelfläche des Anlenkbolzens **9** und einem inneren Rand der Ausnehmung **8** im Zuge der Bewegung des Anlenkbolzens **9** relativ zu der Dichteinheit **6** auftritt.

Ferner hat die gezeigte Art der Ausführung der Abdichtstruktur **1** den Vorteil, dass diese besonders flach ausgebildet ist, wodurch der Bauraum, der zwischen der Seitenwandung **3** und dem Siebeinsatz **11** zur Verfügung steht, nicht überschritten wird. Mit anderen Worten ist die Abdichtstruktur **1** derart flach ausgebildet, dass sie ohne Weiteres jenseits der Seitenwandung **3** angeordnet werden kann.

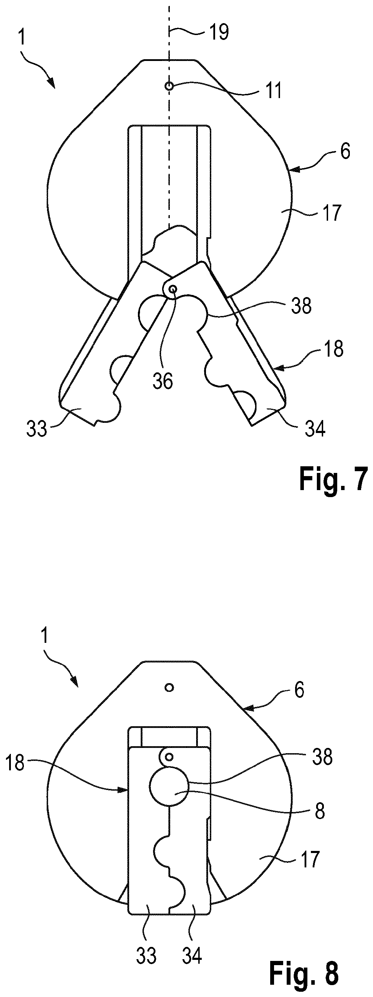

Eine alternative Abdichtstruktur **1,** die in den **Figuren 7 und 8** dargestellt ist, umfasst ebenfalls eine Dichteinheit **6,** die einen Grundkörper **17** sowie einen Schiebeinsatz **18** umfasst. Letzterer ist entlang einer Schiebeachse **19** relativ zu dem Grundkörper **17** bewegbar. Die Besonderheit der alternativen Abdichtstruktur **1** besteht darin, dass der Schiebeinsatz **18** zwei relativ zueinander verschwenkbare Elemente **33, 34** umfasst. Diese sind an einer Schwenkachse **36** miteinander verbunden und um diese Schwenkachse **36** relativ zueinander verschwenkbar. Beide Elemente **33, 34** umfassen jeweils einen Teil eines Randes **38** der Ausnehmung **8,** die in dem Schiebeinsatz **18** ausgebildet ist. Bei Vorliegen des Schiebeinsatzes **18** in einer Offenstellung, die in **Figur 7** dargestellt ist, kann die Abdichtstruktur **1** über einen nicht dargestellten Anlenkbolzen **9** geführt werden, der in der Ausnehmung **8** aufgenommen werden soll. Die Öffnung **8** ist bei Vorliegen des Schiebeinsatzes **18** in dessen Offenstellung ebenfalls "geöffnet", sodass der Schiebeinsatz **18** ohne Weiteres über einen Anlenkbolzen **9** gestülpt werden kann. Sodann werden die beiden Elemente **33, 34** um die Schwenkachse **36** aufeinander zu geschwenkt, sodass der Schiebeinsatz **18** schließlich in seiner Schließstellung vorliegt. Diese ergibt sich anhand von **Figur 8****.** Das Verschwenken der beiden Elemente **33, 34** kann insbesondere mittels einer Führung des Schiebeinsatzes **18** entlang der Schiebeachse **19** erfolgen, wobei diese Führung infolge einer kinematischen Kopplung zwingend die Schwenkbewegung der Elemente **33, 34** antreibt. Bei Vorliegen des Schiebeinsatzes **18** in dessen Schließstellung sind die beiden Teile des Randes **38** der Ausnehmung **8** derart zusammengeführt, dass sie gemeinsam die Ausnehmung **8** bestimmungsgemäß einfassen. Der Anlenkbolzen **9** ist daraufhin formschlüssig in der Ausnehmung **8** aufgenommen.

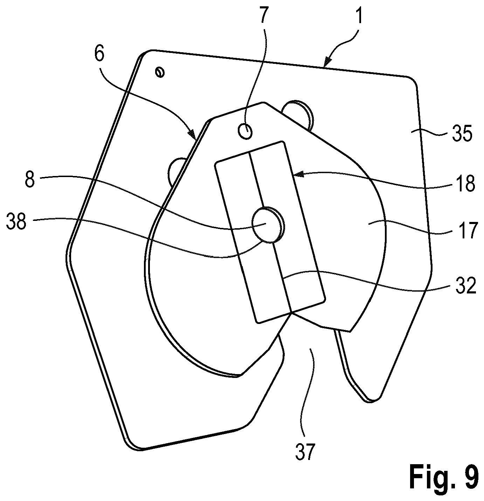

Eine andere Ausführung einer erfindungsgemäßen Abdichtstruktur **1,** die eine Montage der Dichteinheit **6** an einem Anlenkbolzen **9** ermöglicht, ist in **Figur 9** veranschaulicht. Bei dieser Ausgestaltung ist der Schiebeinsatz **18** mit einem Schlitz **32** ausgestattet, der sich von dem Rand **38** der Ausnehmung **8** bis zu einem randseitigen Ende des Schiebeinsatzes **18** erstreckt. Der Schlitz **32** dient dazu, dass ein jeweiliger Anlenkbolzen 9 entlang des Schlitzes **32** bis zu der Ausnehmung **8** geführt werden kann, sodass er schließlich in ihr aufgenommen ist. Um den Eintritt des Anlenkbolzens **9** in den Schlitz **32** zu vereinfachen, ist der Grundkörper **17** der Dichteinheit **6** mit einer Kerbe **37** ausgebildet, die trichterförmig auf den Schlitz **32** zulaufend ausgeformt ist.

Bei dem gezeigten Beispiel ist unabhängig von der Ausgestaltung der Dichteinheit **6** als solcher letztere mittels des Befestigungsmittels **7** auf einer Trägerplatte **35** der Abdichtstruktur **1** montiert. Die Trägerplatte **35** kann wiederum mittels mindestens eines Befestigungsmittels, vorzugsweise einer Mehrzahl von Befestigungsmitteln, an einer Seitenwandung **3** einer jeweiligen Siebeinrichtung **4** befestigt werden. Diese Ausgestaltung ermöglicht eine Vormontage der Dichteinheit **6,** wodurch eine Montage der Abdichtstruktur **1** an einer jeweiligen Seitenwandung **3** vereinfacht ist.

### Bezugszeichenliste

- 1: Abdichtstruktur
- 2: Öffnung
- 3: Seitenwandung
- 4: Siebeinrichtung
- 5: Mähdrescher
- 6: Dichteinheit
- 7: Befestigungsmittel
- 8: Ausnehmung
- 9: Anlenkbolzen
- 10: Ausnehmungsfläche
- 11: Befestigungsachse
- 12: Abstand
- 13: Mittelpunkt
- 14: Dichtfläche
- 15: Langloch
- 16: Langlochachse
- 17: Grundkörper
- 18: Schiebeinsatz
- 19: Schiebeachse
- 20: Siebraum
- 21: Siebeinsatz
- 22: Langlochachse
- 23: Umgebung
- 24: Schneidorgan
- 25: Dreschorgan
- 26: Trennorgan
- 27: Sieborgan
- 28: Längsachse
- 29: Längsachse
- 30: Unterlegscheibe
- 31: Gebläse
- 32: Schlitz
- 33: Element
- 34: Element
- 35: Trägerplatte
- 36: Schwenkachse
- 37: Kerbe
- 38: Rand

## Patentansprüche

1. Mähdrescher mit einer Abdichtstruktur (1) zur Abdichtung einer Öffnung (2), die in eine Seitenwandung (3) einer Siebeinrichtung (4) des Mähdreschers (5) eingebracht ist, umfassend
- eine Dichteinheit (6) sowie
- mindestens ein Befestigungsmittel (7),
wobei die Dichteinheit (6) mindestens eine Ausnehmung (8) aufweist, durch die hindurch ein Anlenkbolzen (9) der Siebeinrichtung (4) führbar ist,
wobei
die Abdichtstruktur (1) eingerichtet ist, senkrecht zu einer Befestigungsachse (11) des Befestigungsmittels (7) orientierte Bewegungen des in der Ausnehmung (8) aufgenommenen Anlenkbolzens (9) auszugleichen,
wobei zumindest ein Teil der Dichteinheit (6) in einer senkrecht zu der Befestigungsachse (11) orientierten Ebene relativ zu dem Befestigungsmittel (7) bewegbar ist,
**dadurch gekennzeichnet, dass**
die Dichteinheit (6) einen Grundkörper (17) und einen Schiebeinsatz (18) umfasst, wobei der Schiebeinsatz (18) relativ zu dem Grundkörper (17) bewegbar an dem Grundkörper (17) gelagert ist, wobei die Ausnehmung (8) in dem Schiebeinsatz (18) ausgebildet ist.

2. Mähdrescher mit einer Abdichtstruktur (1) nach Anspruch 1, **dadurch gekennzeichnet, dass** die Dichteinheit (6) um die Befestigungsachse (11) verschwenkbar ist.

3. Mähdrescher mit einer Abdichtstruktur (1) nach einem der vorhergehenden Ansprüche, **dadurch gekennzeichnet, dass** eine Ausnehmungsfläche (10) der Ausnehmung (8) senkrecht zu einer Befestigungsachse (11) des Befestigungsmittels (7) orientiert ist.

4. Mähdrescher mit einer Abdichtstruktur (1) nach einem der vorhergehenden Ansprüche, **dadurch gekennzeichnet, dass** ein senkrecht zu der Befestigungsachse (11) gemessener Abstand (12) zwischen einem Mittelpunkt (13) der Ausnehmung (8) und der Befestigungsachse (11) im Zuge einer bestimmungsgemäßen Verwendung der Abdichtstruktur (1) fortwährend veränderbar ist.

5. Mähdrescher mit einer Abdichtstruktur (1) nach einem der vorhergehenden Ansprüche, **dadurch gekennzeichnet, dass** die Dichteinheit (6) scheibenförmig ausgebildet ist, wobei vorzugsweise die Befestigungsachse (11) senkrecht zu einer Dichtfläche (14) der Dichteinheit (6) orientiert ist.

6. Mähdrescher mit einer Abdichtstruktur (1) nach Anspruch 5, **dadurch gekennzeichnet, dass** die Ausnehmung (8) in Form einer Kreisscheibe ausgebildet ist, wobei vorzugsweise die Ausnehmungsfläche (10) parallel zu der Dichtfläche (14) orientiert ist.

7. Mähdrescher mit einer Abdichtstruktur (1) nach einem der vorhergehenden Ansprüche, **dadurch gekennzeichnet, dass** das Befestigungsmittel (7) in einem Langloch (15) der Dichteinheit (6) geführt ist, sodass zumindest ein Teil der Dichteinheit (6), vorzugsweise die gesamte Dichteinheit (6), und das Befestigungsmittel (7) entlang einer Langlochachse (16) des Langlochs (15) relativ zueinander bewegbar sind.

8. Mähdrescher mit einer Abdichtstruktur (1) nach einem der Ansprüche 1 bis 7, **dadurch gekennzeichnet, dass** der Schiebeinsatz (18) translatorisch relativ zu dem Grundkörper (17) bewegbar ist, vorzugsweise entlang einer Schiebeachse (19), die sich senkrecht zu der Befestigungsachse (11) erstreckt, wobei vorzugsweise die Schiebeachse (19) die Befestigungsachse (11) schneidet.

9. Mähdrescher mit einer Abdichtstruktur (1) nach einem der vorhergehenden Ansprüche, **dadurch gekennzeichnet, dass** die Dichteinheit (6), vorzugsweise ein Schiebeinsatz (18) derselben, mit einem Schlitz (32) ausgebildet ist, wobei sich der Schlitz (32) von einem Rand der Dichteinheit (6) bis zu der Ausnehmung (8) erstreckt.

10. Mähdrescher mit einer Abdichtstruktur (1) nach einem der Ansprüche 1 bis 9, **dadurch gekennzeichnet, dass** der Schiebeinsatz (18) zwei relativ zueinander verschwenkbare Elemente (33, 34) umfasst, sodass der Schiebeinsatz (18) zwischen einer Offenstellung und einer Schließstellung überführbar ist, wobei ein erster Teil eines Rands (38) der Ausnehmung (8) an dem einen Element (33) und ein zweiter Teil des Rands (38) der Ausnehmung (8) an dem anderen Element (34) ausgebildet sind, sodass die Elemente (33, 34) bei Vorliegen des Schiebeinsatzes (18) in dessen Schließstellung gemeinsam die Ausnehmung (8) begrenzen.

11. Mähdrescher mit einer Abdichtstruktur (1) nach einem der vorhergehenden Ansprüche, **gekennzeichnet durch** eine Trägerplatte (35), wobei die Dichteinheit (6) mittels des Befestigungsmittels (7) an der Trägerplatte (35) befestigt ist.

12. Mähdrescher mit einer Abdichtstruktur (1) nach einem der vorhergehenden Ansprüche, umfassend
- einen in einem Siebraum (20) angeordneten Siebeinsatz (21),
- mindestens einen Anlenkbolzen (9), der mit dem Siebeinsatz (21) zusammenwirkt,
- eine Seitenwandung (3),
wobei der Anlenkbolzen (9) durch eine Öffnung (2) der Seitenwandung (3) hindurch von dem Siebraum (20) in eine Umgebung (23) geführt ist,
wobei die Öffnung (2) mit einem Übermaß gegenüber dem Anlenkbolzen (9) ausgebildet ist, sodass der Anlenkbolzen (9) innerhalb der Öffnung (2) relativ zu der Seitenwandung (3) bewegbar ist,
wobei die Durchführung des Anlenkbolzens (9) durch die Seitenwandung (3) mittels einer Abdichtstruktur (1) abgedichtet ist, sodass mittels des Siebeinsatzes (21) gesiebtes Erntegut nicht in unbeabsichtigter Weise von dem Siebraum (20) durch die Öffnung (2) hindurch in die Umgebung (23) austreten kann,
wobei eine Dichteinheit (6) der Abdichtstruktur (1) mittels eines Befestigungsmittels (7) der Abdichtstruktur (1) mittelbar oder unmittelbar an der Seitenwandung (3) befestigt ist.

13. Mähdrescher mit einer Abdichtstruktur (1) nach Anspruch 12, **dadurch gekennzeichnet, dass** die Dichteinheit (6) um die Befestigungsachse (11) relativ zu der Seitenwandung (3) verschwenkbar ist.

14. Mähdrescher mit einer Abdichtstruktur (1) nach einem der Ansprüche 12 und 13 **dadurch gekennzeichnet, dass** die Öffnung (2) in Form eines Langlochs ausgebildet ist, sodass sich der Anlenkbolzen (9) bei bestimmungsgemäßer Verwendung der Siebeinrichtung (4) relativ zu der Seitenwandung (3) entlang einer Langlochachse (22) der Öffnung (2) bewegen kann.

## Claims

1. A combine harvester with a blocking structure (1) for blocking an opening (2) which is introduced into a side wall (3) of a sieve device (4) of the combine harvester (5), comprising
- a sealing unit (6) as well as
- at least one fastening means (7),
wherein the sealing unit (6) has at least one recess (8) through which a link pin (9) of the sieve device (4) can be guided, wherein
the blocking structure (1) is configured to compensate for movements of the link pin (9) which is received in the recess (8) which are orientated at right angles to a fastening axis (11) of the fastening means (7),
wherein at least a portion of the sealing unit (6) can be moved relative to the fastening means (7) in a plane which is orientated at right angles to the fastening axis (11),
**characterized in that**
the sealing unit (6) comprises a main body (17) and a slide insert (18), wherein the slide insert (18) is mounted on the main body (17) in a manner which is movable relative to the main body (17), wherein the recess (8) is formed in the slide insert (18).

2. The combine harvester with a blocking structure (1) according to claim 1, **characterized in that** the sealing unit (6) can be pivoted about the fastening axis (11).

3. The combine harvester with a blocking structure (1) according to one of the preceding claims, **characterized in that** a recess surface area (10) of the recess (8) is orientated at right angles to a fastening axis (11) of the fastening means (7).

4. The combine harvester with a blocking structure (1) according to one of the preceding claims, **characterized in that** a distance (12) between a central point (13) of the recess (8) and the fastening axis (11) measured at right angles to the fastening axis (11) is continuously variable during the course of an intended use of the blocking structure (1).

5. The combine harvester with a blocking structure (1) according to one of the preceding claims, **characterized in that** the sealing unit (6) is disk-shaped in construction, wherein preferably, the fastening axis (11) is orientated at right angles to a sealing surface (14) of the sealing unit (6).

6. The combine harvester with a blocking structure (1) according to claim 5, **characterized in that** the recess (8) is in the form of a circular disk, wherein preferably, the recess surface area (10) is orientated parallel to the sealing surface (14).

7. The combine harvester with a blocking structure (1) according to one of the preceding claims, **characterized in that** the fastening means (7) is guided in an elongated hole (15) of the sealing unit (6), so that at least a portion of the sealing unit (6), preferably the entire sealing unit (6), and the fastening means (7) can be moved relative to each other along an elongated hole axis (16) of the elongated hole (15).

8. The combine harvester with a blocking structure (1) according to one of claims 1 to 7, **characterized in that** the slide insert (18) can be moved in translation relative to the main body (17), preferably along a slide axis (19) which extends at right angles to the fastening axis (11), wherein preferably, the slide axis (19) intersects the fastening axis (11).

9. The combine harvester with a blocking structure (1) according to one of the preceding claims, **characterized in that** the sealing unit (6), preferably a slide insert (18) thereof, is constructed with a slit (32), wherein the slit (32) extends from an edge of the sealing unit (6) to the recess (8).

10. The combine harvester with a blocking structure (1) according to one of claims 1 to 9, **characterized in that** the slide insert (18) comprises two elements (33, 34) which can be pivoted relative to each other, so that the slide insert (18) can be transposed between an open position and a closed position, wherein a first portion of an edge (38) of the recess (8) is formed on the one element (33) and a second portion of the edge (38) of the recess (8) is formed on the other element (34), so that when the slide insert (18) is present, in their closed position, the elements (33, 34) together delimit the recess (8).

11. The combine harvester with a blocking structure (1) according to one of the preceding claims, **characterized by** a support plate (35), wherein the sealing unit (6) is fastened to the support plate (35) by means of the fastening means (7).

12. The combine harvester with a blocking structure (1) according to one of the preceding claims, comprising
- a sieve insert (21) disposed in a sieve chamber (20),
- at least one link pin (9) which cooperates with the sieve insert (21),
- a side wall (3),
wherein the link pin (9) is guided from the sieve chamber (20) into an environment (23) through an opening (2) in the side wall (3),
wherein the opening (2) is oversized in construction compared with the link pin (9), so that the link pin (9) can be moved inside the opening (2) relative to the side wall (3),
wherein the passage of the link pin (9) through the side wall (3) is blocked by means of the blocking structure (1), so that harvested material sieved by means of the sieve insert (21) cannot escape in an unintentional manner from the sieve chamber (20) through the opening (2) into the environment (23),
wherein a sealing unit (6) of the blocking structure (1) is directly or indirectly fastened to the side wall (3) by means of a fastening means (7) of the blocking structure (1).

13. The combine harvester with a blocking structure (1) according to claim 12, **characterized in that** the sealing unit (6) can be pivoted relative to the side wall (3) about the fastening axis (11).

14. The combine harvester with a blocking structure (1) according to one of claims 12 and 13, **characterized in that** the opening (2) is constructed in the form of an elongated hole, so that during the intended use of the sieve device (4), the link pin (9) can move relative to the side wall (3) along an elongated hole axis (22) of the opening (2).

## Revendications

1. Moissonneuse-batteuse dotée d'une structure d'étanchéité (1) destinée à établir l'étanchéité d'une ouverture (2) qui est réalisée dans une paroi latérale (3) d'un dispositif de grille (4) de la moissonneuse-batteuse (5), comprenant
- une unité d'étanchéité (6) ainsi que
- au moins un moyen de fixation (7),
l'unité d'étanchéité (6) présentant au moins un évidement (8) à travers lequel peut être passée une tige d'articulation (9) du dispositif de grille (4),
la structure d'étanchéité (1) étant conçue pour compenser des mouvements de la tige d'articulation (9) montée dans l'évidement (8) qui sont orientés perpendiculairement à un axe de fixation (11) du moyen de fixation (7),
au moins une partie de l'unité d'étanchéité (6) pouvant être déplacée par rapport au moyen de fixation (7), dans un plan orienté perpendiculairement à l'axe de fixation (11),
**caractérisée en ce que**
l'unité d'étanchéité (6) comprend un corps de base (17) et un insert coulissant (18), ledit insert coulissant (18) étant monté sur le corps de base (17) avec possibilité de déplacement par rapport au corps de base (17), l'évidement (8) étant réalisé sur l'insert coulissant (18).

2. Moissonneuse-batteuse dotée d'une structure d'étanchéité (1) selon la revendication 1, **caractérisée en ce que** l'unité d'étanchéité (6) peut être pivotée autour de l'axe de fixation (11).

3. Moissonneuse-batteuse dotée d'une structure d'étanchéité (1) selon une des revendications précédentes, **caractérisée en ce qu'**une surface d'évidement (10) de l'évidement (8) est orientée perpendiculairement à un axe de fixation (11) du moyen de fixation (7).

4. Moissonneuse-batteuse dotée d'une structure d'étanchéité (1) selon une des revendications précédentes, **caractérisée en ce qu'**une distance (12) entre un centre (13) de l'évidement (8) et l'axe de fixation (11), mesurée perpendiculairement à l'axe de fixation (11), peut être modifiée en continu dans le cadre d'une utilisation conforme à l'emploi prévu de la structure d'étanchéité (1).

5. Moissonneuse-batteuse dotée d'une structure d'étanchéité (1) selon une des revendications précédentes, **caractérisée en ce que** l'unité d'étanchéité (6) est réalisée sous forme de disque, l'axe de fixation (11) étant de préférence orienté perpendiculairement à une surface d'étanchéité (14) de l'unité d'étanchéité (6).

6. Moissonneuse-batteuse dotée d'une structure d'étanchéité (1) selon la revendication 5, **caractérisée en ce que** l'évidement (8) est réalisé sous la forme d'un disque circulaire, la surface d'évidement (10) étant de préférence orientée parallèlement à la surface d'étanchéité (14).

7. Moissonneuse-batteuse dotée d'une structure d'étanchéité (1) selon une des revendications précédentes, **caractérisée en ce que** le moyen de fixation (7) est guidé dans un trou oblong (15) de l'unité d'étanchéité (6), de sorte qu'au moins une partie de l'unité d'étanchéité (6), de préférence la totalité de l'unité d'étanchéité (6), et le moyen de fixation (7) peuvent être déplacés l'un par rapport à l'autre le long d'un axe de trou oblong (16) du trou oblong (15).

8. Moissonneuse-batteuse dotée d'une structure d'étanchéité (1) selon une des revendications 1 à 7, **caractérisée en ce que** l'insert coulissant (18) peut être déplacé en translation par rapport au corps de base (17), de préférence le long d'un axe de coulissement (19) qui s'étend perpendiculairement à l'axe de fixation (11), l'axe de coulissement (19) coupant de préférence l'axe de fixation (11).

9. Moissonneuse-batteuse dotée d'une structure d'étanchéité (1) selon une des revendications précédentes, **caractérisée en ce que** l'unité d'étanchéité (6), de préférence un insert coulissant (18) de celle-ci, est réalisée avec une fente (32), la fente (32) s'étendant depuis un bord de l'unité d'étanchéité (6) jusqu'à l'évidement (8).

10. Moissonneuse-batteuse dotée d'une structure d'étanchéité (1) selon une des revendications 1 à 9, **caractérisée en ce que** l'insert coulissant (18) comprend deux éléments (33, 34) pouvant pivoter l'un par rapport à l'autre, de sorte que l'insert coulissant (18) peut être déplacé entre une position ouverte et une position fermée, sachant qu'une première partie d'un bord (38) de l'évidement (8) est réalisée sur un élément (33) et une deuxième partie du bord (38) est réalisée sur l'autre élément (34), de sorte que les éléments (33, 34) délimitent ensemble l'évidement (8), lorsque l'insert coulissant (18) occupe sa position fermée.

11. Moissonneuse-batteuse dotée d'une structure d'étanchéité (1) selon une des revendications précédentes, **caractérisée en ce qu'**elle présente une plaque support (35), l'unité d'étanchéité (6) étant fixée à la plaque support (35) à l'aide du moyen de fixation (7).

12. Moissonneuse-batteuse dotée d'une structure d'étanchéité (1) selon une des revendications précédentes, comprenant
- un insert de grille (21) disposé dans un espace de grille (20),
- au moins une tige d'articulation (9) qui coopère avec l'insert de grille (21),
- une paroi latérale (3),
la tige d'articulation (9) étant guidée à travers une ouverture (2) de la paroi latérale (3) pour passer de l'espace de grille (20) dans un environnement (23),
l'ouverture (2) étant réalisée avec un surdimensionnement par rapport à la tige d'articulation (9), de sorte que la tige d'articulation (9) peut être déplacée dans l'ouverture (2) par rapport à la paroi latérale (3),
le passage de la tige d'articulation (9) à travers la paroi latérale (3) étant rendu étanche à l'aide d'une structure d'étanchéité (1), de sorte que des produits récoltés tamisés à l'aide de l'insert de grille (21) ne peuvent pas sortir de manière non intentionnelle depuis l'espace de grille (20) dans l'environnement (23), en passant par l'ouverture (2),
une unité d'étanchéité (6) de la structure d'étanchéité (1) pouvant être fixée indirectement ou directement à la paroi latérale (3), à l'aide d'un moyen de fixation (7) de la structure d'étanchéité (1).

13. Moissonneuse-batteuse dotée d'une structure d'étanchéité (1) selon la revendication 12, **caractérisée en ce que** l'unité d'étanchéité (6) peut être pivotée autour de l'axe de fixation (11) par rapport à la paroi latérale (3).

14. Moissonneuse-batteuse dotée d'une structure d'étanchéité (1) selon une des revendications 12 et 13, **caractérisée en ce que** l'ouverture (2) est réalisée sous la forme d'un trou oblong, de sorte que lors de l'utilisation du dispositif de grille (4) conformément à l'emploi prévu, la tige d'articulation (9) peut se déplacer le long d'un axe de trou oblong (22) de l'ouverture (2).
